# EUROPÄISCHE PATENTSCHRIFT

(11) **EP 1 825 590 B1**
(45) Veröffentlichungstag und Bekanntmachung des Hinweises auf die Patenterteilung: **10.09.2014**
(21) Anmeldenummer: 05818150.4
(22) Anmeldetag: 16.12.2005
(51) Int. Cl.: H02M 7/48, H02M 1/00

(54) **VERFAHREN ZUR ERKENNUNG DER LAST EINES INSELWECHSELRICHTERS UND INSELWECHSELRICHTER**
METHOD FOR RECOGNIZING THE LOAD OF AN ISLAND INVERTER AND ISLAND INVERTER
PROCEDE DE DETECTION DE LA CHARGE D'UN ONDULEUR ILOT ET ONDULEUR ILOT

(30) Priorität: 16.12.2004 AT 21092004
(43) Veröffentlichungstag der Anmeldung: 29.08.2007
(73) Patentinhaber: Fronius International GmbH, 4643 Pettenbach (AT)
(72) Erfinder: ANGERER, Christian, A-4522 Sierning (AT); HEIGL, Hannes, A-4731 Prambachkirchen (AT); KREUZER, Harald, A-4020 Linz (AT); WOLF, Christoph, A-4030 Linz (AT)
(74) Vertreter: Sonn & Partner Patentanwälte
(86) Internationale Anmeldenummer: PCT/AT2005/000508
(87) Internationale Veröffentlichungsnummer: WO 2006/063375

(56) Entgegenhaltungen:
- WO-A-00/79675
- JP-A- 7 170 678
- US-A- 4 453 207
- "Solarix - autonome Stromversorgung" FRONIUS DATASHEET, [Online] Februar 1999 (1999-02), Seiten 1-32, XP002402222 Wels-Thalheim Austria Gefunden im Internet: URL:http://www3.fronius.com/download/solar .electronics/usermanuals/4204100626.pdf>

## Beschreibung

Die Erfindung betrifft ein Verfahren zur Erkennung des Betriebszustandes einer an den Ausgang eines Inselwechselrichters angeschlossenen Last, wobei ein Lasterkennungssignal zu vorbestimmten Zeiten an den Ausgang des Inselwechselrichters angelegt wird und während dessen bestimmte elektrische Parameter des Inselwechselrichters gemessen werden und dadurch der Betriebszustand der Last ermittelt wird, worauf bei aktivierter Last der Inselwechselrichter von einem allfälligen Standby-Betrieb in einen Dauerbetrieb umgeschaltet wird und bei deaktivierter Last der Inselwechselrichter von einem allfälligen Dauerbetrieb in den Standby-Betrieb umgeschaltet wird.

Die Erfindung betrifft weiters einen Inselwechselrichter mit Anschlüssen für zumindest eine Batterie bzw. einen Akkumulator, Anschlüssen für zumindest eine Last, einen DC-AC-Wandler zur Erzeugung von Wechselspannung für die zumindest eine Last aus der Gleichspannung der zumindest einen Batterie bzw. einem Akkumulator und mit einer Einrichtung zur Erkennung des Betriebszustands der Last durch Anlegen eines Lasterkennungssignals an die Anschlüsse für die Last, so dass in Abhängigkeit des Betriebszustandes der Last eine Umschaltung des Inselwechselrichters von einem Standby-Betrieb in einen Dauerbetrieb oder umgekehrt ermöglicht wird.

In der Folge ist der Einfachheit halber lediglich von einer Batterie zur Lieferung der erforderlichen Energie die Rede. Die Erfindung gilt jedoch gleichermaßen für andere Energiespeicher, insbesondere wiederaufladbare Akkumulatoren.

Wechselrichter dienen dazu, die Gleichspannung einer Energiequelle in eine Wechselspannung umzuwandeln. Sogenannte Inselwechselrichter erzeugen aus dem Gleichstrom einer Batterie Wechselstrom, so dass es auch fernab vom Versorgungsnetz möglich ist, normale Haushaltsgeräte über eine Batterie zu betreiben. Dank eines Inselwechselrichters kann auf die Anschaffung relativ teurer bzw. zum Teil nicht erhältlicher Geräte und auf eine teure und mit hohen Verlusten behaftete Leitung auf niedriger Gleichspannung von beispielsweise 12 oder 24 Volt verzichtet werden. Es können die üblichen für eine Wechselspannung von 230 Volt ausgelegten Geräte wie z.B. Werkzeuge, Fernseher, Kühlschränke, Elektromotoren etc. verwendet werden. Derartige Inselwechselrichter werden beispielsweise im Campingbereich, auf Schiffen oder an abgelegenen Orten, ohne 230 Volt-Wechselspannungsversorgung eingesetzt.

Um die vorhandenen Batterieressourcen optimal auszunützen, wird der Inselwechselrichter dann in einen sog. Standby-Betrieb geschaltet, wenn kein Verbraucher bzw. keine Last aktiviert ist. Da der Inselwechselrichter in diesem Standby-Betrieb wesentlich weniger, üblicherweise nur rund ein Zehntel der Energie gegenüber dem Dauerbetrieb aufnimmt, wird dadurch die Batterielebensdauer wesentlich erhöht und somit das Intervall, in welchem die Batterien erneuert bzw. aufgeladen werden müssen, wesentlich verlängert. Im Dauerbetrieb versorgt der Inselwechselrichter die daran angeschlossenen Lasten kontinuierlich mit der Wechselspannung.

Zusätzlich kann noch eine weitere Betriebsart vorgesehen sein, bei der der Inselwechselrichter völlig ausgeschaltet wird. Dies ist beispielsweise für jene Zeiten denkbar, während der der Campingbus, das Schiff oder die Wochenendwohnung nicht bewohnt ist und kein elektrischer Strom benötigt wird.

Wird während des Standby-Betriebs des Inselwechselrichters eine Last aktiviert, muss der Inselwechselrichter möglichst rasch in den Dauerbetrieb umgeschaltet werden, um eine Versorgung der Last mit elektrischer Energie zu gewährleisten. Zu diesem Zweck sind Verfahren zur Lasterkennung bekannt, bei welchen zu vorbestimmten Zeiten Lasterkennungssignale an den Ausgang des Inselwechselrichters angelegt werden und während dessen bestimmte elektrische Parameter, insbesondere der abgegebene Strom bzw. die auftretende Spannungsänderung an den Anschlüssen der Batterie des Inselwechselrichters gemessen werden, um den Betriebszustand der Last zu ermitteln. Wird eine aktivierte Last erkannt, erfolgt eine Umschaltung des Inselwechselrichters auf Dauerbetrieb, wodurch eine Versorgung der Last mit der vom Inselwechselrichter gelieferten Wechselspannung gegeben wird. Beim Lasterkennungssignal handelt es sich üblicherweise um ein aus einigen Perioden einer sinusförmigen Spannung bestehendes Signal bestimmter konstanter Amplitude.

Die US 4 453 207 A beschreibt ein Verfahren zur Erkennung des Betriebszustandes einer an den Ausgang eines Inselwechselrichters angeschlossenen Last. Dabei weist das Lasterkennungssignal keine in Abhängigkeit der Art der Last veränderte Parameter auf.

Beispielsweise beschreibt die WO 00/79675 A1 ein Verfahren zum Erkennen einer an einem Wechselrichter bedarfsweise anschaltbaren Last und ein entsprechendes Lasterkennungssystem, welches dadurch gekennzeichnet ist, dass die Erkennung der Last ohne zusätzlichen Aufwand für eine galvanische Trennung ermöglicht wird.

Weitere Lasterkennungssysteme, die ein Lasterkennungssignal erzeugen, sind beispielsweise aus der JP 10136689 A, der JP 2003 223228 A sowie der WO 97/43892 A2 bekannt.

Um eine rasche Reaktion auf sich ändernde Betriebszustände der angeschlossenen Lasten zu ermöglichen, müssen die Lasterkennungssignale in relativ kurzen Abständen von beispielsweise 0,5 s ausgesandt werden. Ebenso wird durch die Lasterkennung ein Deaktivieren der Last erkannt, worauf der Inselwechselrichter wieder in den Standby-Betrieb mit geringerer Energieaufnahme umgeschaltet werden kann.

Nachteilig bei den bekannten Lasterkennungsverfahren ist, dass Lasten mit besonders geringer Leistungsaufnahme, wie z.B. Sparlampen sowie Sonderverbraucher, wie z.B. Kühlschränke mit eigener Elektronik, nicht oder nur schwer erkannt werden. Somit ist bei Vorhandensein solcher Lasten ein Umschalten des Inselwechselrichters auf den Standby-Betrieb nicht möglich, da im Falle der Aktivierung der Sparlampe bzw. des Kühlschranks eine Umschaltung des Inselwechselrichters auf Dauerbetrieb nicht erfolgen würde. Wird der Inselwechselrichter nicht im Standby-Modus betrieben, resultiert wiederum eine geringere Lebensdauer der angeschlossenen Batterie bzw. ein geringeres Intervall zwischen den erforderlichen Ladezyklen für die Batterie am Eingang des Inselwechselrichters. Ebenso funktionieren die herkömmlichen Lasterkennungsverfahren nicht bei elektronischen Verbrauchern mit einer Einschaltverzögerung, wie z.B. bei Leuchtstoffröhren oder anderen Geräten mit elektronischer Steuerung.

Zur Anpassung der Lasterkennung an nicht vorhersehbare Parameter und an das Alter und den Typ der Batterie sowie der Länge und den Querschnitt von Ladeleitungen ist es bekannt, eine Kalibrierung der Lasterkennung durchzuführen. Dabei erfolgt eine Anpassung der Amplitude des Lasterkennungssignals an die jeweiligen Bedingungen. Beispielsweise bietet der Inselwechselrichter mit der Typenbezeichnung "Solarix"^{™} einen derartigen Kalibriervorgang für die Lasterkennung an.

Nachteilig bei den bekannten Lasterkennungsverfahren ist, dass immer ein fix vorgegebenes Lasterkennungssignal zum Erkennen von Lasten bzw. Verbrauchern eingesetzt wird, wodurch die sehr unterschiedlichen Lasten häufig nicht richtig erkannt werden. In diesem Fall wird der Inselwechselrichter gar nicht bzw. stark verzögert in den Dauerbetrieb umgeschaltet. Dadurch ist der Benutzer gezwungen für den sicheren Betrieb seiner Lasten den Inselwechselrichter ständig im Dauerbetrieb zu verwenden, wodurch ein erhöhter Energiebedarf auch dann notwendig ist, wenn von den Lasten keine Energie verbraucht wird. Der Inselwechselrichter benötigt im Dauerbetrieb wesentlich mehr Energie als beim Standby-Betrieb, in dem nur periodische Lasterkennungssignale ausgesandt werden. Damit muss der Inselwechselrichter diese benötigte Energie aus der angeschlossenen Batterie nehmen, wodurch die Betriebsdauer wesentlich verringert wird.

Die Aufgabe der vorliegenden Erfindung liegt darin, ein oben genanntes Verfahren zur Lasterkennung zu schaffen, durch welches eine Erkennung des Betriebszustandes aller möglichen Lasten mit hoher Sicherheit möglich wird. Es soll auch bei Lasten, die mit bisherigen Verfahren nicht erkannt werden konnten, der Inselwechselrichter im Standby-Modus betrieben werden können, und somit der Energieverbrauch des Inselwechselrichters gesenkt und die Lebensdauer der Energiequelle wesentlich erhöht werden. Nachteile bekannter Lasterkennungsverfahren sollen vermieden bzw. reduziert werden.

Eine weitere Aufgabe der vorliegenden Erfindung besteht in der Schaffung eines oben genannten Inselwechselrichters mit einer Einrichtung zur Erkennung des Betriebszustandes der angeschlossenen Lasten, welcher möglichst zuverlässig verschiedenste Arten von Lasten erkennt, so dass ein Betrieb im Standby-Modus bei allen möglichen Lasten zulässig ist, da bei Erkennung der Lasten automatisch in den Dauerbetrieb umgeschaltet wird. Der Inselwechselrichter soll möglichst einfach und kostengünstig aufgebaut sein.

Die erste Aufgabe der Erfindung wird dadurch gelöst, dass an den Ausgang des Inselwechselrichters ein Lasterkennungssignal mit zumindest einem in Abhängigkeit der Art der Last veränderten Parameter angelegt wird, und bei aktivierter Last zumindest ein Parameter des Lasterkennungsimpulses so lange automatisch variiert wird, bis der aktivierte Betriebszustand der Last erkannt wird und danach der zumindest eine Parameter automatisch gespeichert wird. Das erfindungsgemäße Lasterkennungsverfahren passt das Lasterkennungssignal somit optimal an die jeweilige Last an, wodurch eine sichere Erkennung des Betriebszustandes der Last und eine rasche Umschaltung vom Standby-Modus in den Dauerbetrieb bzw. umgekehrt ermöglicht wird. Durch die automatische Variation zumindest eines Parameters des Lasterkennungsimpulses kann ohne das Vorhandensein gespeicherter Lasterkennungssignale ein optimales Lasterkennungssignal für die angeschlossene Last ausgewählt werden. Der Benutzer aktiviert die entsprechende Last und startet ein Programm am Inselwechselrichter, worauf der gewählte Parameter beispielsweise die Impulsdauer optimal an die angeschlossene Last angepasst wird. Die automatisch ermittelte optimale Impulsdauer wird dann gespeichert und definiert die verwendeten Lasterkennungssignale. Durch diese Maßnahme kann der Inselwechselrichter auch bei Lasten, die bisher nicht zuverlässig erkannt werden konnten in Standby-Betrieb geschaltet werden, wodurch der Energieverbrauch wesentlich reduziert werden kann. In der Folge wird eine höhere Batterielebensdauer bzw. ein größerer Zyklus für den Ersatz der Batterie bzw. Vornahme der Ladezyklen erreicht. Je nach Art der Last wird zumindest ein Parameter des Lasterkennungssignals entsprechend verändert, wodurch eine möglichst zuverlässige Lasterkennung erreicht wird. Dadurch können auch Verbraucher mit niedriger Energieaufnahme, wie z.B. Sparlampen oder Verbraucher mit elektronischen Schalteinrichtungen, wie z.B. Kühlgeräte, zuverlässig erkannt werden. Bei Anschluss mehrerer Lasten, wie es üblicherweise der Fall ist, wird das Lasterkennungssignal auf jene Last ausgelegt, welche am schwierigsten zu erkennen ist bzw. welche mit möglichst wenig Verzögerung durch Umschalten des Inselwechselrichters in den Dauerbetrieb aktiviert werden muss.

Gemäß einem Merkmal der Erfindung wird die Wiederholungsrate des Lasterkennungssignals in Abhängigkeit der Art der Last verändert. Für manche Lasten ist es erforderlich, die Erkennung in sehr kurzen Intervallen durchzuführen, so dass eine sichere Aktivierung der Last möglich wird. Für andere Lasten kann die Wiederholungsrate des Lasterkennungssignals als nicht so kritisch betrachtet werden, weshalb höhere Wiederholungsraten gewählt werden können.

Die Wiederholungsraten können beispielsweise zwischen wenigen Millisekunden und einigen Stunden in Abhängigkeit der Last verändert werden. Die Wiederholungsrate kann auch an die Bedürfnisse des Benutzers angepasst werden.

Alternativ oder zusätzlich zur Wiederholungsrate kann auch die Signaldauer des Lasterkennungssignals in Abhängigkeit der Art der Last verändert werden. Auf diese Art können auch Sonderverbraucher wie z.B. Kühlschränke mit eigener Elektronik sicher erkannt werden, da üblicherweise derartige Geräte mit elektronischen Schaltungen eine verzögerte Stromaufnahme aufweisen.

Alternativ oder zusätzlich zu den oben genannten Parametern kann auch die Amplitude des Lasterkennungssignals in Abhängigkeit der Art der Last verändert werden. Durch eine an die Last angepasste, möglichst kleine Amplitude des Lasterkennungssignals kann wiederum Energie im Standby-Betrieb gespart werden.

Alternativ oder zusätzlich zu den oben genannten Parametern kann auch die Hüllkurvenform des Lästerkennungssignals in Abhängigkeit der Art der Last verändert werden. Durch eine geeignete Wahl der Hüllkurve wird ein sicheres Einschalten von speziellen Lasten, wie z.B. Motoren und kapazitiven Verbrauchern ohne Überstrom ermöglicht.

Gemäß einem weiteren Merkmal der Erfindung ist weiters vorgesehen, dass die Frequenz des Lasterkennungssignals in Abhängigkeit der Art der Last verändert wird. Auch dadurch kann das Lasterkennungssignal auf spezielle Arten von Lasten angepasst werden, wodurch eine sichere Erkennung der Last ermöglicht wird.

Die Impulsdauer des Lasterkennungsimpulses kann auch durch Auswahl der Anzahl der Perioden mit der vorgegebenen Frequenz in Abhängigkeit der Art der Last verändert werden. Somit wird die Impulsdauer nicht durch absolute Zeitwerte sondern durch die Anzahl der Perioden der Frequenz des Lasterkennungssignals ausgewählt und entsprechend eingestellt.

Zumindest einer der genannten Parameter des Lasterkennungsimpulses wird gemäß einem weiteren Merkmal der Erfindung in Abhängigkeit der Art der Last manuell eingestellt. Der Benutzer kann beispielsweise unter Zuhilfenahme entsprechender schriftlicher Unterlagen jene Last auswählen, auf welche er das Lasterkennungssignal anpassen will und bekommt einen Vorschlag für die Einstellung zumindest eines Parameters, welche er dann am Impulswechselrichter vornehmen kann.

Alternativ dazu können für verschiedene Arten von Lasten bereits definierte Lasterkennungssignale oder deren Parameter gespeichert sein, aus welchen der Benutzer das gewünschte Lasterkennungssignal oder dessen Parameter auswählen kann, wodurch dieses ausgewählte Lasterkennungssignal bzw. das Lasterkennungssignal mit den ausgewählten Parametern an dem Ausgang des Inselwechselrichters angelegt wird. Dadurch wird eine höhere Bedienungsfreundlichkeit erzielt, da der Benutzer nicht die entsprechenden Parameter des Lasterkennungssignals einstellen muss, sondern unter bereits voreingestellten Lasterkennungssignalen oder Parametern lediglich auswählen muss.

Gemäß einem weiteren Merkmal der Erfindung ist vorgesehen, dass aus den gespeicherten Lasterkennungssignalen oder deren gespeicherten Parametern bei aktivierter Last jenes Lasterkennungssignal oder jene Parameter automatisch ausgewählt werden, bei welchen die rascheste Erkennung des aktivierten Betriebszustandes der Last ermöglicht wird. Auf diese Weise kann eine automatische Optimierung des Inselwechselrichters an die jeweilige angeschlossene Last erfolgen. In der Praxis wird der Benutzer lediglich jene Last, auf welche er den Inselwechselrichter optimieren möchte, einschalten und ein Programm am Inselwechselrichter starten, das automatisch alle Varianten an Lasterkennungssignalen oder deren Parametern hintereinander ausprobiert und daraus das optimale Lasterkennungssignal wählt, welches zukünftig für die Lasterkennung verwendet wird.

Vorteilhafterweise sind zusammen mit den in Abhängigkeit der Arten der Lasten gespeicherten Lasterkennungssignalen auch Informationen über die Lasten, wie z.B. Art oder Produktnummer bzw. Hersteller der Last, gespeichert. Auf diese Weise können dem Benutzer in besonders einfacher Art und Weise die verschiedensten Arten von Lasten, beispielsweise auf einer Anzeige am Inselwechselrichter angeboten werden, worauf nach Auswahl der entsprechenden Last beispielsweise dem Kühlschrank eines bestimmten Herstellers mit einer bestimmten Typenbezeichnung das zugehörige optimierte Lasterkennungssignal ausgewählt und der Lasterkennung zu Grunde gelegt wird.

Die zweite erfindungsgemäße Aufgabe wird durch einen oben genannten Inselwechselrichter gelöst, wobei eine Einrichtung zur automatischen Veränderung zumindest eines Parameters des Lasterkennungssignals bis zur Erkennung des aktivierten Betriebszustandes der Last und ein Speicher zum Ablegen der Parameter des Lasterkennungssignales bei Erkennung des aktivierten Betriebszustandes der Last vorgesehen ist. Durch die Verwendung eines optimierten an die Art der Last bzw. des Verbrauchers angepassten Lasterkennungssignals, kann eine sichere Umschaltung des Inselwechselrichters vom Standby-Betrieb in den Dauerbetrieb erzielt werden, und durch den Standby-Betrieb Energie eingespart werden und somit die Lebensdauer der Energiequellen, insbesondere der Batterien bzw. Akkumulatoren, erhöht werden. Durch die Einrichtung zur automatischen Veränderung oder Auswahl zumindest eines Parameters des Lasterkennungssignals nimmt der Inselwechselrichter dem Benutzer die Arbeit für die manuelle Veränderung eines Parameters des Lasterkennungssignals bis zum Herausfinden des optimalen Lasterkennungssignals für spezielle Lasten ab. In der Praxis wird der Benutzer beispielsweise dem Parameter auswählen, die Last aktivieren und danach ein Programm am Inselwechselrichter starten, welches die verschiedenen Größen des Parameters ausprobiert und den optimalen Parameter herausfindet und danach im Speicher ablegt, wodurch dieser Parameter für die verwendeten Lasterkennungssignale festgelegt wird.

Dabei können Einrichtungen zur Veränderung der Wiederholungsrate, der Signaldauer, der Amplitude, der Hüllkurvenform oder der Frequenz einzeln oder in Kombination vorgesehen sein.

Diese Einrichtungen zur Veränderung oder Auswahl zumindest eines Parameters des Lasterkennungssignals können in einfacher Weise durch einen Schalter oder auch Taster gebildet sein.

Ebenso ist es möglich, dass eine Einrichtung zur Veränderung oder Auswahl zumindest eines Parameters des Lasterkennungssignals durch eine Anzeige und zumindest ein Betätigungselement gebildet ist, wodurch den Benutzer die Einstellarbeit erleichtert werden kann. Beispielsweise kann der Benutzer durch verschiedene Lasterkennungssignale bzw. der Parameter scrollen und das gewünschte Lasterkennungssignal bzw. die gewünschten Parameter durch Betätigung des Betätigungselements auswählen.

Gemäß einem weiteren Merkmal der Erfindung ist eine Einrichtung zur Veränderung oder Auswahl zumindest eines Parameters des Lasterkennungssignals durch eine Fernbedienung gebildet. Dies erleichtert die Auswahl des gewünschten Lasterkennungssignals noch mehr. Dabei ist der Begriff Fernbedienung sehr allgemein zu verstehen, so dass sowohl Fernbedienungen in Art jener wie sie für TV-Geräte üblich sind aber auch Geräte, welche eine Bedienung aus größeren Distanzen ermöglichen, umfasst sind. Somit kann der Benutzer beispielsweise über Hochfrequenzsignale von größeren Distanzen eine Einstellung des Inselwechselrichters vornehmen.

Gemäß einem weiteren Merkmal der Erfindung ist zumindest ein Speicher für die Ablage der Lasterkennungssignale oder deren Parameter für verschiedene Arten von Lasten vorgesehen. Dadurch können verschiedenste Lasterkennungssignale für verschiedenste Lastarten im Speicher des Inselwechselrichters abgelegt sein, die lediglich durch entsprechende Definition durch die Benutzer ausgewählt werden. Dadurch wird dem Benutzer die Arbeit für die Einstellung der Parameter der Lasterkennungssignale abgenommen.

Weiters kann eine Einrichtung zur automatischen Auswahl jenes Lasterkennungssignals aus den gespeicherten Lasterkennungssignalen vorgesehen sein, bei welchem der Betriebszustand der aktivierten Last am raschesten erkannt wird. Somit findet der Inselwechselrichter automatisch nach einem bestimmten Algorithmus das optimale Lasterkennungssignal für die entsprechende Last heraus.

Zusätzlich kann der Inselwechselrichter mit Anschlüssen für eine externe Energiequelle, beispielsweise ein Solarmodul, versehen sein. Somit kann über diese externe Energiequelle, wie z.B. dem Solarmodul eine Aufladung der Batterien bzw. Akkumulatoren ermöglicht werden und somit die Lebensdauer der autonomen Energieversorgung noch weiter erhöht werden.

Die vorliegende Erfindung wird anhand der beigefügten Zeichnungen näher erläutert.

Darin zeigen:
Fig. 1 ein Blockschaltbild eines Inselwechselrichters;
Fig. 2 zeitliche Verläufe zweier Lasterkennungssignale zur Veranschaulichung der verschiedenen Parameter der Lasterkennungssignale;
Fig. 3 ein Blockschaltbild einer Ausführungsform eines Inselwechselrichters mit der erfindungsgemäßen Lasterkennung;
Fig. 4 zeigt Diagramme bei der Anwendung eines erfindungsgemäßen Verfahrens zur Lasterkennung; und
Fig. 5 ein Beispiel für die Bedienungseinheit eines erfindungsgemäßen Inselwechselrichters.

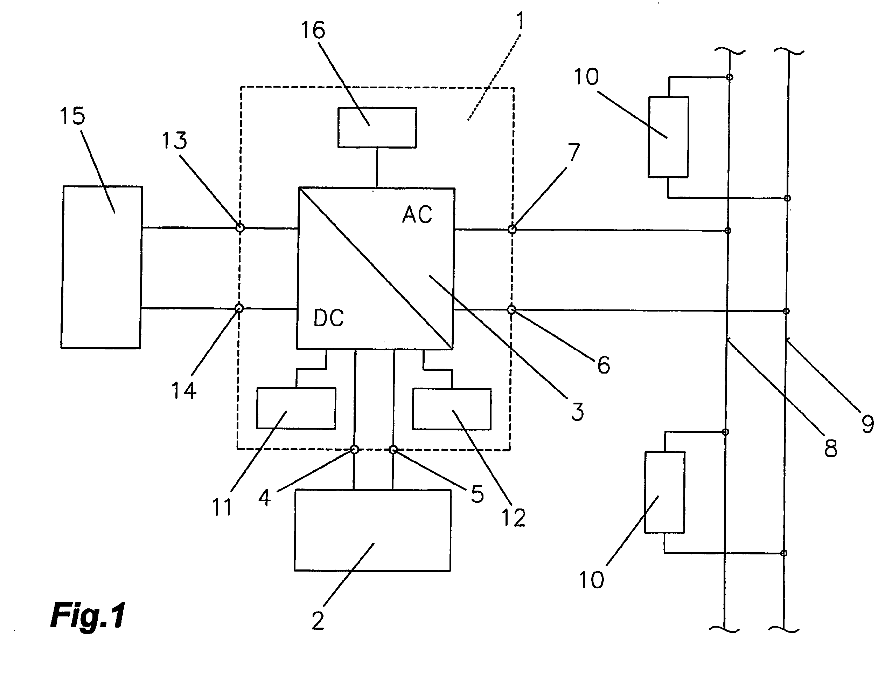

Fig. 1 zeigt ein Blockschaltbild eines Inselwechselrichters 1 der aus einer von einer Batterie 2 bzw. einem Akkumulator gelieferten Gleichspannung mit Hilfe eines DC-AC-Moduls 3 eine Wechselspannung üblicherweise von 230 Volt liefert. Die zumindest eine Batterie 2 wird über entsprechende Anschlüsse 4, 5 an den Inselwechselrichter 1 angeschlossen. Über Anschlüsse 6, 7 wird die erzeugte Wechselspannung über entsprechende Leitungen 8, 9 an die Lasten 10 geliefert. Der Inselwechselrichter 1 kann weiters mit einer Steuervorrichtung 11 und einer Ein-Ausgabeeinheit 12 ausgerüstet sein. Zusätzlich können über weitere Anschlüsse 13, 14 externe Energiequellen 15, wie z.B. ein Solarmodul angeschlossen werden, welche zur Versorgung der Lasten 10 mit Energie bzw. zum Aufladen der Batterie 2 mit Energie dient. Wird der Inselwechselrichter 1 ständig im Dauerbetrieb gefahren, benötigen seine Komponenten bzw. Bauelemente permanent elektrische Energie, welche aus der Batterie 2 gewonnen wird. Demnach würde auch bei Nichtbetrieb der Lasten 10 und beispielsweise keiner bzw. einer zu geringen Zulieferung von Energie über die Energiequelle 15 die Batterie 2 durch den Inselwechselrichter 1 entleert und somit deren Lebensdauer verringert. Zu diesem Zweck besitzt der Inselwechselrichter 1 üblicherweise einen sog. Standby-Betrieb, in dem ein wesentlich geringerer Energieverbrauch notwendig ist. Damit der Inselwechselrichter 1 im Standby-Betrieb das Einschalten einer Last 10 bemerkt, muss in periodischen Zeitabständen das Einschalten der Lasten 10 erkannt werden. Dies geschieht durch eine Einrichtung 16 zur Erzeugung eines Lasterkennungssignals S_{L}, welches über die Anschlüsse 6, 7 an die Lasten 10 ausgesandt wird. Gleichzeitig wird auf der Gleichspannungsseite des DC-AC-Moduls 3 des Inselwechselrichters 1 der abgegebene Strom bzw. die Spannungsänderung erfasst, wodurch die Aktivierung einer Last 10 erkannt wird. Wird eine derartige Last 10 erkannt, erfolgt eine Umschaltung des Inselwechselrichters 1 aus dem Standby-Betrieb in den Dauerbetrieb, wodurch die entsprechende Last 10 mit Wechselspannung versorgt wird. Dabei wird üblicherweise ein Lasterkennungssignal S_{L} verwendet, welches aus einigen Perioden einer sinusförmigen Wechselspannung besteht. Verschiedene Lasten 10 mit Elektronik, wie z.B. Kühlgeräte würden mit einem solchen Lasterkennungssignal S_{L} nicht zuverlässig erkannt werden, wodurch keine Umschaltung des Inselwechselrichters 1 in den Dauerbetrieb und somit keine Versorgung der Last 10 mit der notwendigen Wechselspannung resultieren würde. In der Folge würde der Benutzer den Inselwechselrichter 1 ständig im Dauerbetrieb fahren und den erhöhten Energiebedarf in Kauf nehmen, wodurch die Lebensdauer bzw. Versorgungsdauer der Batterie 2 verringert wird.

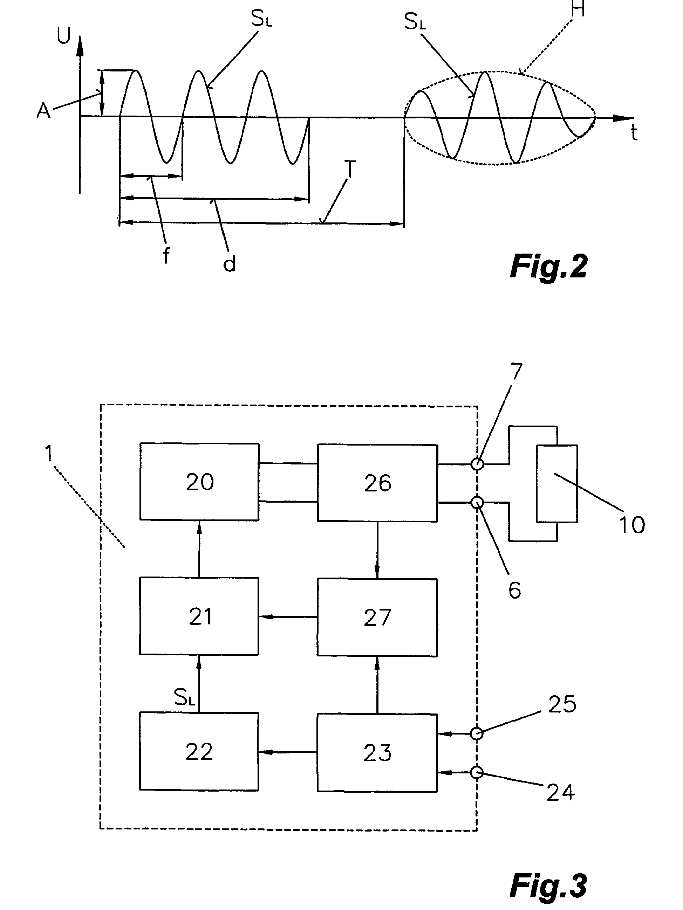

Fig. 2 zeigt den zeitlichen Verlauf T verschiedner Lasterkennungssignale S_{L} und deren Parameter. Das Lasterkennungssignal S_{L} im linken Teil des Zeitdiagramms besteht aus drei Perioden einer sinusförmigen Wechselspannung mit einer Frequenz f bzw. Periodendauer 1/f und einer Amplitude A. Die Dauer d des Lasterkennungssignals S_{L} beträgt im dargestellten Beispiel dreimal die Periodendauer 1/f der sinusförmigen Wechselspannung. In vorgegebenen Zeitabständen T werden die Lasterkennungssignale S_{L} wiederholt. Diese Wiederholungsrate T kann beispielsweise zwischen wenigen Millisekunden und mehreren Stunden betragen. Das im Zeitdiagramm rechts dargestellte Lasterkennungssignal S_{L} weist eine bestimmte Form der Hüllkurve H auf, welche ebenfalls zur sichereren Erkennung von Lasten 10 dienen kann. Somit können folgende Parameter der Lasterkennungssignale S_{L} variiert werden:
Wiederholungsrate T
Impulsdauer d
Amplitude A
Form der Hüllkurve H
Frequenz f

Die Parameter T, d, A, H und f können vom Benutzer manuell oder vom Inselwechselrichter 1 automatisch an die jeweilige Last 10 angepasst und entsprechend verändert werden. Somit wird der Lasterkennungsimpuls S_{L} optimal an die Last 10 angepasst und dadurch ein zuverlässiges Erkennen der Last 10 erzielt, wodurch der Inselwechselrichter 1 bei prinzipiell allen Lasten 10 im Standby-Modus betrieben werden kann und somit Energie gespart werden kann. Durch die Wahl sehr langer Wiederholraten T und kleiner Amplituden A wird ein energiesparender Betrieb des Inselwechselrichters 1 auch im Standby-Modus erzielt. Hingegen wird bei sehr kleinen Wiederholraten T eine schnelle Reaktion auf eingeschaltene Lasten 10 und eine praktisch verzögerungsfreie Aktivierung derselben durch Umschaltung des Inselwechselrichters 1 auf Dauerbetrieb erzielt.

Durch Wahl einer längeren Impulsdauer d wird auch das zuverlässige Erkennen von Lasten 10 mit verzögerter Stromaufnahme, beispielsweise von Kühlgeräten mit einer Elektronik erzielt. Die Elektronik üblicher Kühlgeräte muss eine gewisse Zeit mit Energie versorgt werden, bis der Kompressor schlussendlich aktiviert wird, sodass durch Anpassung der Impulsdauer d eine sichere Aktivierung des Kühlgerätes ermöglicht wird. Durch eine höhere Impulsdauer d wird somit auch eine sichere Erkennung und ein Einschalten der Last 10 erreicht. Durch entsprechende Wahl der Hüllkurve H wird auch ein sicheres Starten von Motoren oder das Einschalten von kapazitiven Verbrauchern ohne Überstrom möglich.

Fig. 3 zeigt ein Blockschaltbild einer Ausführungsform eines Inselwechselrichters 1 mit der erfindungsgemäßen Lasterkennung. Der Inselwechselrichter 1 beinhaltet eine Ausgangsbrücke 20, welche mit den Anschlüssen 6, 7 mit der zumindest einen Last 10 verbunden ist. Die Ausgangsbrücke 20 liefert die für die Last 10 erforderliche Wechselspannung. Das Modul 21 dient zur Kontrolle der Ausgangsbrücke 20. Eine Einrichtung 22 zur Erzeugung eines Lasterkennungssignals S_{L} ist mit der Ausgangsbrückenkontrollschaltung 21 verbunden. Die zur Erzeugung des Lasterkennungssignals S_{L} erforderlichen Parameter sind im Speicher 23 abgelegt. Die Parameter können entweder über entsprechende Bedienungselemente 24 manuell, oder Aktivierung einer entsprechenden Software über die Leitung 25 automatisch festgelegt bzw. ausgewählt werden. Das Lasterkennungssignal S_{L} wird über die Ausgangsbrücke 20 an die Last 10 gelegt. In einer Einrichtung 26 zur Signalerfassung wird der Ausgangsstrom und bzw. oder die Ausgangsspannung an den Anschlüssen 6, 7 des Inselwechselrichters 1 gemessen und bei Erkennung einer aktivierten Last 10 eine entsprechende Steuerschaltung 27 aktiviert. Die Steuerschaltung 27 bewirkt über die Ausgangsbrückenkontrollschaltung 21 eine Umschaltung des Inselwechselrichters vom Standby-Betrieb auf Dauerbetrieb, bzw. bei Erkennung des Deaktivierens der Last 10 eine Umschaltung wiederum in den Standby-Betrieb.

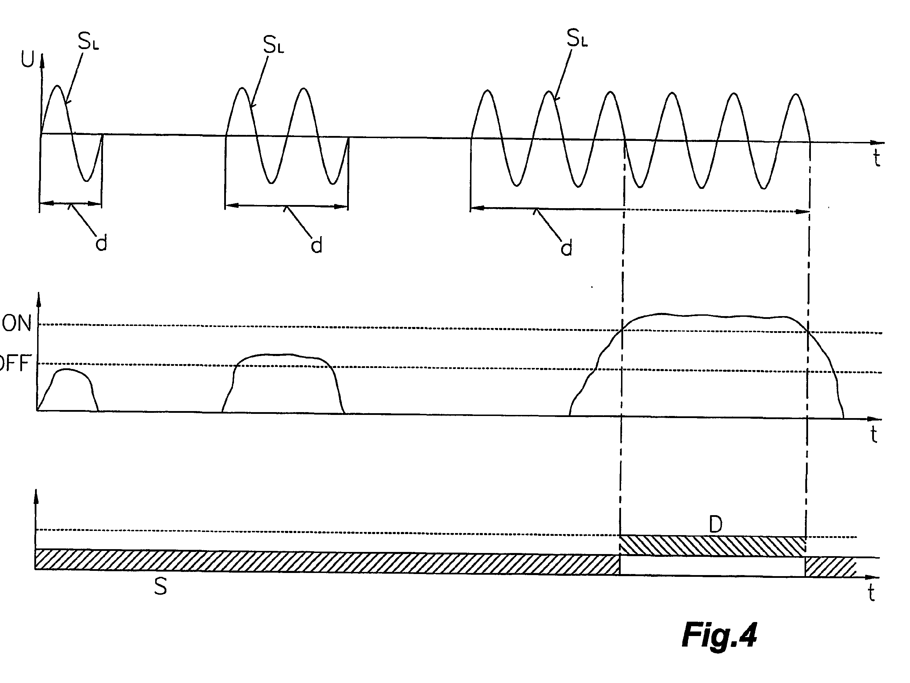

Fig. 4 zeigt die Zeitverläufe eines Beispiels einer erfindungsgemäßen automatischen Lasterkennung am Beispiel einer Last 10. Im Falle der ersten beiden Lasterkennungssignale S_{L} ist die von der Signalerfassungsschaltung 26 ermittelte Signalantwort zu gering, dass eine Aktivierung der Last 10 erkannt wird. Erst bei ausreichend langem Lasterkennungssignal S_{L} wird das Aktivieren der Last 10 zuverlässig erkannt, worauf der Inselwechselrichter in den Dauerbetrieb D geschaltet wird. Bei Unterschreitung der Signalantwort unter einem bestimmten Pegel, wird das Deaktivieren der Last 10 erkannt und der Inselwechselrichter 1 wieder in den Standby-Modus S geschaltet. Somit wird durch Variation des Parameters der Signaldauer d des Lasterkennungssignals eine zuverlässige Erkennung der Last erreicht.

Dies geschieht bei der erfindungsgemäßen Lösung derartig, dass der Inselwechselrichter 1 beispielsweise auf automatische Lasterkennung mit variierender Signaldauer d gestellt wird, wie dies hier beispielsweise in Fig. 4 dargestellt wurde. Hierbei sendet nunmehr der Inselwechselrichter 1 zuerst ein Lasterkennungssignal S_{L} mit der kleinstmöglichen Signaldauer d aus. Wird von der Signalerfassungsschaltung 26 keine Last 10 erkannt, so wird nunmehr die Signaldauer d um einen vordefinierten Wert erhöht und ein neuerliches Lasterkennungssignal S_{L} ausgesandt. Dies wird vom Inselwechselrichter 1 solange wiederholt, bis eine Erkennung der Last 10 zustande kommt, worauf direkt in den Dauerbetrieb D umgeschaltet wird. Die Umschaltung vom Lasterkennungssignal S_{L} in den Dauerbetrieb D ist in dem dritten Lasterkennungssignal S_{L} durch unterschiedliche Linientypen ersichtlich, wobei in vollen Linien die Lasterkennungsphase dargestellt ist, und in strichlierten Linien der Dauerbetrieb D ersichtlich ist.

Nunmehr ist es beispielsweise möglich, dass der Inselwechselrichter 1 das zuletzt ausgesendete Lasterkennungssignal S_{L}, bei dem die Last 10 erkannt wurde, in dem Speicher 23 hinterlegt und dieses bei einer neuerlichen Lasterkennung aus dem Standby-Betrieb S heranzieht. Es ist natürlich auch möglich, dass die kontinuierliche Veränderung des Lasterkennungssignals S_{L} immer durchgeführt wird, d.h., dass der Inselwechselrichter 1 im Standby-Betrieb S immer mit dem kleinsten Lasterkennungssignal S_{L} beginnt und dies bis zur Erkennung der Last 10 verändert. Hierbei kann der Benutzer den Inselwechselrichter 1 jedoch vorgeben, welchen Parameter, insbesondere die Wiederholungsrate T, die Impulsdauer d, die Amplitude A, die Form der Hüllkurve H, die Frequenz f des Lasterkennungssignals S_{L} verändert werden soll. Auch ist es möglich, dass der Inselwechselrichter 1 so eingestellt bzw. programmiert wird, dass dieser mehrere Parameter hintereinander oder gleichzeitig verändert.

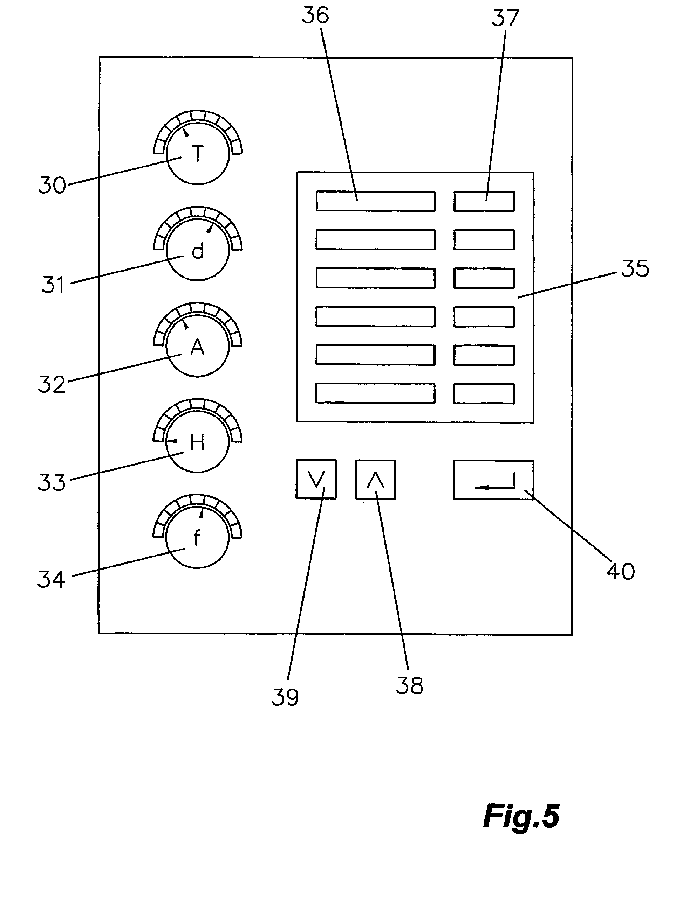

Fig. 5 zeigt schließlich ein Beispiel einer Bedieneinheit eines erfindungsgemäßen Inselwechselrichters, bestehend aus Einrichtungen 30, 31, 32, 33 und 34 zur Veränderung oder Auswahl der Wiederholungsrate T der Signaldauer d der Amplitude A der Hüllkurvenform H und der Frequenz f des Lasterkennungssignals S_{L}.

Zusätzlich oder alternativ dazu kann auch eine Anzeige 35 vorgesehen sein, an der verschiedene abgespeicherte Lasterkennungssignale S_{L} in Form von Texten, Informationen oder Signaldarstellungen 36 angeboten werden. Weiters kann zusätzliche Information 37 über die entsprechende Last 10, für die das entsprechende Lasterkennungssignal S_{L} angepasst ist, wie z.B. Produktinformation oder dgl. an der Anzeige 35 dargestellt werden, sodass der Benutzer direkt seine Last 10, also sein Produkt mit der Typenbezeichnung, auswählen kann, worauf ein darauf abgestimmtes Lasterkennungssignal S_{L} eingestellt wird. Über Betätigungselemente 38, 39, 40 kann eine einfache Auswahl des gewünschten Lasterkennungssignals S_{L} für die entsprechende Last 10 durch den Benutzer erfolgen. Die Einstellung des Inselwechselrichters 1 kann auch über eine Fernbedienung (nicht dargestellt) durchgeführt werden.

Auch ist es möglich, dass der Benutzer eine eigene Bezeichnung einer oder mehrerer Lasten 10 manuell eingibt und ein entsprechendes Lasterkennungssignal S_{L} dazu hinterlegt bzw. jeweils eine automatische Lasterkennung durchführen lässt und anschließend das Lasterkennungssignal S_{L} zu der Bezeichnung abspeichert. So ist es beispielsweise möglich, dass der Benutzer bei speziellen Kombinationen von Lasten 10 seine eigene Bezeichnung vergibt und ein optimales Lasterkennungssignal S_{L} erstellt bzw. ermittelt.

## Patentansprüche

1. Verfahren zur Erkennung des Betriebszustandes einer an den Ausgang (6, 7) eines Inselwechselrichters (1) angeschlossenen Last (10), wobei ein Lasterkennungssignal (S_{L}) zu vorbestimmten Zeiten an den Ausgang (6, 7) des Inselwechselrichters (1) angelegt wird und während dessen bestimmte elektrische Parameter am Inselwechselrichter (1) gemessen werden, und dadurch der Betriebszustand der Last (10) ermittelt wird, worauf bei aktivierter Last (10) der Inselwechselrichter von einem allfälligen Standby-Betrieb in einen Dauerbetrieb umgeschaltet wird und bei deaktivierter Last (10) der Inselwechselrichter von einem allfälligen Dauerbetrieb in den Standby-Betrieb umgeschaltet wird, **dadurch gekennzeichnet, dass** an den Ausgang (6, 7) des Inselwechselrichters (1) ein Lasterkennungssignal (S_{L}) mit zumindest einem in Abhängigkeit der Art der Last (10) veränderten Parameter (T, d, A, H, f) angelegt wird, und bei aktivierter Last (10) zumindest ein Parameter (T, d, A, H, f) des Lasterkennungsimpulses (S_{L}) solange automatisch variiert wird, bis der aktivierte Betriebszustand der Last (10) erkannt wird, und danach der zumindest eine Parameter (T, d, A, H, f) automatisch gespeichert wird.

2. Lasterkennungsverfahren nach Anspruch 1, **dadurch gekennzeichnet, dass** die Wiederholungsrate (T) des Lasterkennungssignals (S_{L}) in Abhängigkeit der Art der Last (10) verändert wird.

3. Lasterkennungsverfahren nach Anspruch 2, **dadurch gekennzeichnet, dass** die Wiederholungsrate (T) zwischen wenigen Millisekunden und einigen Stunden in Abhängigkeit der Art der Last (10) verändert wird.

4. Lasterkennungsverfahren nach einem der Ansprüche 1 bis 3, **dadurch gekennzeichnet, dass** die Signaldauer (d) des Lasterkennungssignals (S_{L}) in Abhängigkeit der Art der Last (10) verändert wird.

5. Lasterkennungsverfahren nach einem der Ansprüche 1 bis 4, **dadurch gekennzeichnet, dass** die Amplitude (A) des Lasterkennungssignals (S_{L}) in Abhängigkeit der Art der Last (10) verändert wird.

6. Lasterkennungsverfahren nach einem der Ansprüche 1 bis 5, **dadurch gekennzeichnet, dass** die Hüllkurvenform (H) des Lasterkennungssignals (S_{L}) in Abhängigkeit der Art der Last (10) verändert wird.

7. Lasterkennungsverfahren nach einem der Ansprüche 1 bis 6, **dadurch gekennzeichnet, dass** die Frequenz (f) des Lasterkennungssignals (S_{L}) in Abhängigkeit der Art der Last (10) verändert wird.

8. Lasterkennungsverfahren nach einem der Ansprüche 4 bis 7, **dadurch gekennzeichnet, dass** die Impulsdauer (d) des Lasterkennungsimpulses (S_{L}) durch Auswahl der Anzahl der Perioden mit der vorgegebenen Frequenz (f) in Abhängigkeit der Art der Last (10) verändert wird.

9. Lasterkennungsverfahren nach einem der Ansprüche 1 bis 8, **dadurch gekennzeichnet, dass** zumindest ein Parameter (T, d, A, H, f) des Lasterkennungsimpulses (S_{L}) in Abhängigkeit der Art der Last (10) manuell (30-34) eingestellt wird.

10. Lasterkennungsverfahren nach einem der Ansprüche 1 bis 9, **dadurch gekennzeichnet, dass** das an den Ausgang (6, 7) des Inselwechselrichters (1) angelegte Lasterkennungssignal (S_{L}) oder dessen Parameter (T, d, A, H, f) aus mehreren für verschiedene Arten von Lasten (10) definierten und gespeicherten Lasterkennungssignalen (S_{L}) oder deren Parametern (T, d, A, H, f) ausgewählt wird.

11. Lasterkennungsverfahren nach Anspruch 10, **dadurch gekennzeichnet, dass** aus den gespeicherten Lasterkennungssignalen (S_{L}) oder deren gespeicherten Parametern (T, d, A, H, f) bei aktivierter Last (10) jenes Lasterkennungssignal (S_{L}) oder jene Parameter (T, d, A, H, f) automatisch ausgewählt werden, bei welchem die rascheste Erkennung des aktivierten Betriebszustandes der Last (10) ermöglicht wird.

12. Lasterkennungsverfahren nach Anspruch 10 oder 11, **dadurch gekennzeichnet, dass** zusammen mit den in Abhängigkeit der Arten der Lasten (10) gespeicherten Lasterkennungssignalen (S_{L}) Informationen über die Lasten (10) gespeichert sind.

13. Inselwechselrichter (1) mit Anschlüssen (4, 5) für zumindest eine Batterie (2) bzw. einen Akkumulator, Anschlüssen (6, 7) für zumindest eine Last (10), einem DC/AC-Wandler (3) zur Erzeugung von Wechselspannung (AC) für die zumindest eine Last (10) aus der Gleichspannung (DC) der zumindest einen Batterie (2) bzw. des zumindest einen Akkumulators, und mit einer Einrichtung zur Erkennung des Betriebszustands der Last (10) durch Anlegen eines Lasterkennungssignals (S_{L}) an die Anschlüsse (6, 7) für die Last, sodass in Abhängigkeit des Betriebszustandes der Last (10) eine Umschaltung des Inselwechselrichters (1) von einem Stand-by-Betrieb in einen Dauerbetrieb oder umgekehrt ermöglicht wird, **dadurch gekennzeichnet, dass** eine Einrichtung zur automatischen Veränderung oder Auswahl zumindest eines Parameters (T, d, A, H, f) des Lasterkennungssignals (S_{L}) bis zur Erkennung des aktivierten Betriebszustandes der Last (10) und ein Speicher (23) zum Ablegen der Parameter (T, d, A, H, f) des Lasterkennungssignales (S_{L}) bei Erkennung des aktivierten Betriebszustandes der Last (10) vorgesehen ist.

14. Inselwechselrichter (1) nach Anspruch 13, **dadurch gekennzeichnet, dass** eine Einrichtung (30) zur Veränderung oder Auswahl der Wiederholungsrate (T) des Lasterkennungssignals (S_{L}) vorgesehen ist.

15. Inselwechselrichter (1) nach Anspruch 13 oder 14, **dadurch gekennzeichnet, dass** eine Einrichtung (31) zur Veränderung oder Auswahl der Signaldauer (d) des Lasterkennungssignals (S_{L}) vorgesehen ist.

16. Inselwechselrichter (1) nach einem der Ansprüche 13 bis 15, **dadurch gekennzeichnet, dass** eine Einrichtung (32) zur Veränderung oder Auswahl der Amplitude (A) des Lasterkennungssignals (S_{L}) vorgesehen ist.

17. Inselwechselrichter (1) nach einem der Ansprüche 13 bis 16, **dadurch gekennzeichnet, dass** eine Einrichtung (33) zur Veränderung oder Auswahl der Hüllkurvenform (H) des Lasterkennungssignals (S_{L}) vorgesehen ist.

18. Inselwechselrichter (1) nach einem der Ansprüche 13 bis 17, **dadurch gekennzeichnet, dass** eine Einrichtung (34) zur Veränderung oder Auswahl der Frequenz (f) des Lasterkennungssignals (S_{L}) vorgesehen ist.

19. Inselwechselrichter (1) nach einem der Ansprüche 13 bis 18, **dadurch gekennzeichnet, dass** eine Einrichtung zur Veränderung oder Auswahl zumindest eines Parameters (T, d, A, H, f) des Lasterkennungssignals (S_{L}) durch einen Schalter gebildet ist.

20. Inselwechselrichter (1) nach einem der Ansprüche 13 bis 19, **dadurch gekennzeichnet, dass** eine Einrichtung zur Veränderung oder Auswahl zumindest eines Parameters (T, d, A, H, f) des Lasterkennungssignals (S_{L}) durch eine Anzeige (35) und zumindest ein Betätigungselement (38, 39, 40) gebildet ist.

21. Inselwechselrichter (1) nach einem der Ansprüche 13 bis 20, **dadurch gekennzeichnet, dass** eine Einrichtung zur Veränderung oder Auswahl zumindest eines Parameters (T, d, A, H, f) des Lasterkennungssignals (S_{L}) durch eine Fernbedienung gebildet ist.

22. Inselwechselrichter (1) nach einem der Ansprüche 13 bis 21, **dadurch gekennzeichnet, dass** zumindest ein Speicher (23) für die Ablage der Lasterkennungssignale (S_{L}) oder deren Parameter (T, d, A, H, f) für verschiedene Arten von Lasten (10) vorgesehen ist.

23. Inselwechselrichter (1) nach Anspruch 22, **dadurch gekennzeichnet, dass** zumindest ein Speicher (23) für die Ablage von Informationen über die verschiedenen Arten der Lasten (10) vorgesehen ist.

24. Inselwechselrichter (1) nach Anspruch 22 oder 23, **dadurch gekennzeichnet, dass** eine Einrichtung zur automatischen Auswahl jenes Lasterkennungssignals (S_{L}) aus den gespeicherten Lasterkennungssignalen (S_{L}) vorgesehen ist, bei welchem der Betriebszustand der aktivierten Last (10) am raschesten erkannt wird.

25. Inselwechselrichter (1) nach einem der Ansprüche 13 bis 24, **dadurch gekennzeichnet, dass** Anschlüsse (13, 14) für eine externe Energiequelle (15) beispielsweise ein Solarmodul vorgesehen sind.

## Claims

1. A method for recognizing the operational state of a load (10) connected to the output (6, 7) of a stand-alone inverter (1), wherein a load recognition signal (S_{L}) is applied to the output (6, 7) of the stand-alone inverter (1) at predetermined times during which specific electric parameters are measured on the stand-alone inverter (1) to thereby determine the operational state of the load (10), whereupon, with the load (10) activated, the stand-alone inverter is switched from a possible standby mode to permanent operation and, with the load (10) deactivated, the stand-alone inverter is switched from a possible permanent operation to standby mode, **characterized in that** a load-recognition signal (S_{L}) with at least one parameter (T, d, A, H, f) changed as a function of the type of load (10) is applied to the output (6, 7) of the stand-alone inverter (1) and, with the load (10) activated, at least one parameter (T, d, A, H, f) of the load recognition pulse (S_{L}) is automatically varied until the activated operational state of the load (10) is recognized, and the at least one parameter (T, d, A, H, f) is subsequently automatically stored.

2. A load recognition method according to claim 1, **characterized in that** the repetition rate (T) of the load recognition signal (S_{L}) is changed as a function of the type of load (10).

3. A load recognition method according to claim 2, **characterized in that** the repetition rate (T) is changed between some milliseconds and several hours as a function of the type of load (10).

4. A load recognition method according to any one of claims 1 to 3, **characterized in that** the signal duration (d) of the load recognition signal (S_{L}) is changed as a function of the type of load (10).

5. A load recognition method according to any one of claims 1 to 4, **characterized in that** the amplitude (A) of the load recognition signal (S_{L}) is changed as a function of the type of load (10).

6. A load recognition method according to any one of claims 1 to 5, **characterized in that** the envelope shape (H) of the load recognition signal (S_{L}) is changed as a function of the type of load (10).

7. A load recognition method according to any one of claims 1 to 6, **characterized in that** the frequency (f) of the load recognition signal (S_{L}) is changed as a function of the type of load (10).

8. A load recognition method according to any one of claims 4 to 7, **characterized in that** the pulse duration (d) of the load recognition pulse (S_{L}) is changed by selecting the number of periods with the pregiven frequency (f) as a function of the type of load (10).

9. A load recognition method according to any one of claims 1 to 8, **characterized in that** at least one parameter (T, d, A, H, f) of the load recognition pulse (S_{L}) is manually (30-34) adjusted as a function of the type of load (10).

10. A load recognition method according to any one of claims 1 to 9, **characterized in that** the load recognition signal (S_{L}) applied to the output (6, 7) of the stand-alone inverter (1), or its parameter (T, d, A, H, f), is selected from several load recognition signals (S_{L}), or their parameters (T, d, A, H, f), defined and stored for different types of loads (10).

11. A load recognition method according to claim 10, **characterized in that**, with the load (10) activated, that load recognition signal (S_{L}) or parameter (T, d, A, H, f) which enables the quickest recognition of the activated operational state of the load (10) is automatically selected from the stored load recognition signals (S_{L}) or their stored parameters (T, d, A, H, f).

12. A load recognition method according to any one of claims 10 or 11, **characterized in that**, together with the load recognition signals (S_{L}) stored as a function of the types of loads (10), also information on the loads (10) is stored.

13. A stand-alone inverter (1) including connections (4, 5) for at least one battery (2) or at least one accumulator, connections (6, 7) for at least one load (10), a DC-AC converter (3) for generating an alternating voltage (AC) for the at least one load (10) from the direct voltage (DC) of the at least one battery (2) or the at least one accumulator, and a device for recognizing the operational state of the load (10) by applying a load recognition signal (S_{L}) to the connections (6, 7) for the load so as to enable the switching of the stand-alone inverter (1) from standby operation to permanent operation, or vice versa, as a function of the operational state of the load (10), **characterized in that** a device for automatically changing or selecting at least one parameter (T, d, A, H, f) of the load recognition signal (S_{L}) until the recognition of the activated operational state of the load (10) and a memory (23) for storing the parameters (T, d, A, H, f) of the load recognition signal (S_{L}) upon recognition of the activated operational state of the load (10) are provided.

14. A stand-alone inverter (1) according to claim 13, **characterized in that** a means (30) for changing or selecting the repetition rate (T) of the load recognition signal (S_{L}) is provided.

15. A stand-alone inverter (1) according to claim 13 or 14, **characterized in that** a means (31) for changing or selecting the signal duration (d) of the load recognition signal (S_{L}) is provided.

16. A stand-alone inverter (1) according to any one of claims 13 to 15, **characterized in that** a means (32) for changing or selecting the amplitude (A) of the load recognition signal (S_{L}) is provided.

17. A stand-alone inverter (1) according to any one of claims 13 to 16, **characterized in that** a means (33) for changing or selecting the envelope shape (H) of the load recognition signal (S_{L}) is provided.

18. A stand-alone inverter (1) according to any one of claims 13 to 17, **characterized in that** a means (34) for changing or selecting the frequency (f) of the load recognition signal (S_{L}) is provided.

19. A stand-alone inverter (1) according to any one of claims 13 to 18, **characterized in that** a means for changing or selecting the at least one parameter (T, d, A, H, f) of the load recognition signal (S_{L}) is comprised of a switch.

20. A stand-alone inverter (1) according to any one of claims 13 to 19, **characterized in that** a means for changing or selecting at least one parameter (T, d, A, H, f) of the load recognition signal (S_{L}) is comprised of a display (35) and at least one operating element (38, 39, 40).

21. A stand-alone inverter (1) according to any one of claims 13 to 20, **characterized in that** a means for changing or selecting at least one parameter (T, d, A, H, f) of the load recognition signal (S_{L}) is comprised of a remote control.

22. A stand-alone inverter (1) according to any one of claims 13 to 21, **characterized in that** at least one memory (23) for storing the load recognition signals (S_{L}), or their parameters (T, d, A, H, f), for different types of loads (10) is provided.

23. A stand-alone inverter (1) according to claim 22, **characterized in that** at least one memory (23) for storing information on the different types of loads (10) is provided.

24. A stand-alone inverter (1) according to claim 22 or 23, **characterized in that** a device for automatically selecting, from the stored load recognition signals (S_{L}), that load recognition signal (S_{L}) by which the operational state of the activated load (10) is recognized the fastest is provided.

25. A stand-alone inverter (1) according to any one of claims 13 to 2427, **characterized in that** connections (13, 14) for an external energy source (15), e.g. a solar module, are provided.

## Revendications

1. Procédé permettant de détecter l'état de fonctionnement d'une résistance de charge (10) raccordée à la sortie (6, 7) d'un onduleur en îlotage (1), un signal de détection de charge (S_{L}) étant appliqué à des instants prédéterminées à la sortie (6, 7) de l'onduleur en îlotage (1) et pendant ce temps des paramètres électriques déterminés sont mesurés sur l'onduleur en îlotage (1), et, de ce fait, est déterminé l'état de fonctionnement de la résistance de charge (10), à la suite de quoi, lorsque la résistance de charge (10) est activée, l'onduleur en îlotage est commuté à partir d'un éventuel régime d'attente vers un régime permanent et, lorsque la résistance de charge (10) est désactivée, l'onduleur en îlotage est commuté à partir d'un éventuel régime permanent vers un régime d'attente, **caractérisé en ce qu'**à la sortie (6, 7) de l'onduleur en îlotage (1) est appliqué un signal de détection de charge (S_{L}) avec au moins un paramètre (T, d, A, H, f) modifié en fonction du type de la résistance de charge (10), et lorsque la résistance de charge (10) est activée, au moins un paramètre (T, d, A, H, f) de l'impulsion de détection de charge (S_{L}) est modifiée automatiquement jusqu'à ce que l'état de fonctionnement activé de la résistance de charge (10) est détecté, et ensuite, ledit au moins un paramètre (T, d, A, H, f) est stocké automatiquement en mémoire.

2. Procédé de détection de charge selon la revendication 1, **caractérisé en ce que** la vitesse de répétition (T) du signal de détection de charge (S_{L}) est modifiée en fonction du type de la résistance de charge (10).

3. Procédé de détection de charge selon la revendication 2, **caractérisé en ce que** la vitesse de répétition (T) est modifiée entre quelques millisecondes et quelques heures en fonction du type de la résistance de charge (10).

4. Procédé de détection de charge selon l'une quelconque des revendications 1 à 3, **caractérisé en ce que** la durée (d) du signal de détection de charge (S_{L}) est modifiée en fonction du type de la résistance de charge (10).

5. Procédé de détection de charge selon l'une quelconque des revendications 1 à 4, **caractérisé en ce que** l'amplitude (A) du signal de détection de charge (S_{L}) est modifiée en fonction du type de la résistance de charge (10).

6. Procédé de détection de charge selon l'une quelconque des revendications 1 à 5, **caractérisé en ce que** la forme d'onde de l'enveloppante (H) du signal de détection de charge (S_{L}) est modifiée en fonction du type de la résistance de charge (10).

7. Procédé de détection de charge selon l'une quelconque des revendications 1 à 6, **caractérisé en ce que** la fréquence (f) du signal de détection de charge (S_{L}) est modifiée en fonction du type de la résistance de charge (10).

8. Procédé de détection de charge selon l'une quelconque des revendications 4 à 7, **caractérisé en ce que** la durée (d) de l'impulsion de détection de charge (S_{L}) est modifiée en fonction du type de la résistance de charge (10), par le choix du nombre de périodes avec la fréquence (f) prédéfinie.

9. Procédé de détection de charge selon l'une quelconque des revendications 1 à 8, **caractérisé en ce qu'**au moins un paramètre (T, d, A, H, f) de l'impulsion de détection de charge (S_{L}) est réglé manuellement (30-34) en fonction du type de la résistance de charge (10).

10. Procédé de détection de charge selon l'une quelconque des revendications 1 à 9, **caractérisé en ce que** le signal de détection de charge (S_{L}) ou le paramètre (T, d, A, H, f) de celui-ci, appliqués à la sortie (6, 7) de l'onduleur en îlotage (1), sont sélectionnés parmi plusieurs signaux de détection de charge (S_{L}) ou paramètres (T, d, A, H, f) de ceux-ci définis pour différents types de résistance de charge (10) et stockés en mémoire.

11. Procédé de détection de charge selon la revendication 10, **caractérisé en ce qu'**à partir des signaux de détection de charge (S_{L}) stockés en mémoire ou à partir des paramètres (T, d, A, H, f) de ceux-ci stockés en mémoire est sélectionné automatiquement, lorsque la résistance de charge (10) de ce signal est activée, le signal de détection de charge (S_{L}) ou les paramètres (T, d, A, H, f), avec lesquels la plus rapide détection de l'état de fonctionnement de la résistance de charge (10) est rendue possible.

12. Procédé de détection de charge selon la revendication 10 ou 11, **caractérisé en ce que** des informations sur les résistances de charge (10) sont stockées en mémoire conjointement avec les signaux de détection de charge (S_{L}) stockés en mémoire en fonction du type des résistances de charge (10).

13. Onduleur en îlotage (1), comportant des raccords (4, 5) pour au moins une batterie (2) ou un accumulateur, des raccords (6, 7) pour au moins une résistance de charge (10), un convertisseur DC/AC (3) destiné à générer une tension alternative (AC) pour ladite au moins une résistance de charge (10) à partir de la tension continue (DC) de ladite au moins une batterie (2) ou dudit au moins un accumulateur, et comportant un dispositif permettant de détecter l'état de fonctionnement de la résistance de charge (10) par l'application d'un signal de détection de charge (S_{L}) aux raccords (6, 7) pour la résistance de charge, de telle sorte que, en fonction de l'état de fonctionnement de la résistance de charge (10), une commutation de l'onduleur en îlotage (1) à partir d'un régime d'attente vers un régime permanent ou inversement est possible, **caractérisé en ce qu'**il est prévu un dispositif permettant de faire varier automatiquement ou de sélectionner automatiquement au moins un paramètre (T, d, A, H, f) du signal de détection de charge (S_{L}) jusqu'à ce que l'état de fonctionnement activé de la résistance de charge (10) soit détecté, et une mémoire (23) permettant de stocker les paramètres (T, d, A, H, f) du signal de détection de charge (S_{L}) au moment de la détection de l'état de fonctionnement activé de la résistance de charge (10).

14. Onduleur en îlotage (1) selon la revendication 13, **caractérisé en ce qu'**il est prévu un dispositif (30) permettant de faire varier ou de sélectionner la vitesse de répétition (T) du signal de détection de charge (S_{L}).

15. Onduleur en îlotage (1) selon la revendication 13 ou 14, **caractérisé en ce qu'**il est prévu un dispositif (31) permettant de faire varier ou de sélectionner la durée (d) du signal de détection de charge (S_{L}).

16. Onduleur en îlotage (1) selon l'une quelconque des revendications 13 à 15, **caractérisé en ce qu'**il est prévu un dispositif (32) permettant de faire varier ou de sélectionner l'amplitude (A) du signal de détection de charge (S_{L}).

17. Onduleur en îlotage (1) selon l'une quelconque des revendications 13 à 16, **caractérisé en ce qu'**il est prévu un dispositif (33) permettant de faire varier ou de sélectionner la formé d'onde de l'enveloppante (H) du signal de détection de charge (S_{L}).

18. Onduleur en îlotage (1) selon l'une quelconque des revendications 13 à 17, **caractérisé en ce qu'**il est prévu un dispositif (34) permettant de faire varier ou de sélectionner la fréquence (f) du signal de détection de charge (S_{L}).

19. Onduleur en îlotage (1) selon l'une quelconque des revendications 13 à 18, **caractérisé en ce qu'**un dispositif permettant de faire varier ou de sélectionner au moins un paramètre (T, d, A, H, f) du signal de détection de charge (S_{L}) est formé par un commutateur.

20. Onduleur en îlotage (1) selon l'une quelconque des revendications 13 à 19, **caractérisé en ce qu'**un dispositif permettant de faire varier ou de sélectionner au moins un paramètre (T, d, A, H, f) du signal de détection de charge (S_{L}) est formé par un affichage (35) et au moins un élément d'actionnement (38, 39, 40).

21. Onduleur en îlotage (1) selon l'une quelconque des revendications 13 à 20, **caractérisé en ce qu'**un dispositif permettant de faire varier ou de sélectionner au moins un paramètre (T, d, A, H, f) du signal de détection de charge (S_{L}) est formé par une télécommande.

22. Onduleur en îlotage (1) selon l'une quelconque des revendications 13 à 21, **caractérisé en ce qu'**il est prévu au moins une mémoire (23) pour y stocker les signaux de détection de charge (S_{L}) ou les paramètres (T, d, A, H, f) de ceux-ci pour différents types de résistances de charge (10).

23. Onduleur en îlotage (1) selon la revendication 22, **caractérisé en ce qu'**il est prévu au moins une mémoire (23) pour y stocker des informations sur les différents types de résistances de charge (10).

24. Onduleur en îlotage (1) selon la revendication 22 ou 23, **caractérisé en ce qu'**il est prévu un dispositif permettant de sélectionner automatiquement parmi les signaux de détection de charge (S_{L}) le signal de détection de charge (S_{L}), avec lequel est détecté le plus rapidement l'état de fonctionnement activé de la résistance de charge (10).

25. Onduleur en îlotage (1) selon l'une quelconque des revendications 13 à 24, **caractérisé en ce que** des raccords (13, 14) sont prévus pour une source d'énergie (15) externe, telle qu'un module solaire.
